# EUROPÄISCHE PATENTSCHRIFT

(11) **EP 1 850 122 B1**
(45) Veröffentlichungstag und Bekanntmachung des Hinweises auf die Patenterteilung: **04.01.2012**
(21) Anmeldenummer: 07106087.5
(22) Anmeldetag: 12.04.2007
(51) Int. Cl.: G01N 25/16, G01N 25/48

(54) **Ofen zur Durchführung von dilatometrischen Untersuchungen**
Furnace for performing dilatometric investigations
Four destiné à l'exécution de rechercher dilatométriques

(30) Priorität: 24.04.2006 DE 102006019434
(43) Veröffentlichungstag der Anmeldung: 31.10.2007
(73) Patentinhaber: Bähr-Thermoanalyse GmbH, 32603 Hüllhorst (DE)
(72) Erfinder: Bähr, Heinz, 32545, Bad Oeynhausen (DE)
(74) Vertreter: Dantz, Jan Henning

(56) Entgegenhaltungen:
- DE-A1- 2 263 340
- DE-C- 859 533
- US-A- 4 313 679

## Beschreibung

Die Erfindung betrifft einen Ofen nach dem Oberbegriff des Anspruches 1.
Aus der EP 1 199 541 ist eine Vorrichtung zur Messung von Größenänderungen bei Proben, die Temperaturschwankungen unterworfen werden, bekannt, bei der zwischen zwei optischen Systemen ein Halter für die Probe angeordnet ist. Die Probe ist dabei von einem rohrförmigen Ofenkörper umgeben, damit entsprechende Temperaturänderungen auf die Probe einwirken können. Es stellt dabei ein erhebliches Problem dar, in einem Ofen zur Durchführung von solchen dilatometrischen Untersuchungen ein gleichförmiges Temperaturfeld zu erzeugen. Im Bereich der Probe sollen die Linien der Temperaturgradienten möglichst miteinander parallel verlaufen, zumindest symmetrisch zur Probe liegen, damit sich über die gesamte Probe möglichst identische Temperaturverhältnisse ergeben.

Bei bekannten Öfen der oben genannten Art ist man bislang davon ausgegangen, die Gleichförmigkeit des Temperaturfeldes im Probenraum durch die Gestalt eines rohrförmigen Ofenkörpers zu erzielen, wobei sich die Heizelemente in den Seitenwandungen des Probenraumes befanden und sich entsprechend dem rohrförmigen Aufbau über eine erhebliche Höhe erstreckten. Die Nachteile bekannter Öfen dieser Bauart liegen darin, dass im Bereich des Probenraumes ein nur angenähert homogenes Temperaturfeld erreicht werden kann und die Oberfläche der Probe einen erheblich unterschiedlichen Abstand zu dem Heizelement haben kann, je nachdem wo die Probe angeordnet ist und welche Geometrie sie besitzt. Zudem ist der Probenraum nur schwer zugänglich und schlecht für eine automatische Beladung geeignet.

Der Erfindung liegt deshalb die Aufgabe zugrunde, einen Ofen der eingangs genannten Art zu schaffen, bei dem eine höhere Gleichförmigkeit des Temperaturfeldes im Probenraum erreicht und eine bessere Zugänglichkeit des Probenraums verwirklicht werden kann.

Diese Aufgabe wird mit einem Ofen mit den Merkmalen des Anspruches 1 gelöst. Weitere vorteilhafte Ausgestaltungen sind in den Unteransprüchen angegeben.

Erfindungsgemäß sind die Heizelemente auf der zum Probenträger gewandten Seite im wesentlichen eben ausgebildet und begrenzen den Probenraum an der Oberseite und der Unterseite, wobei sich die Heizelemente in eine horizontale Richtung allseitig über den Probenträger hinaus erstrecken. Der besondere Vorteil des Ofens liegt darin, dass in radialer bzw. horizontaler Richtung gesehen die mit den Heizelementen ausgestatteten ober- und unterseitigen Wandungen des Probenraums viel länger als die zentral dazwischen angeordnete Probe ist, so dass sich im Zentrum des Probenraumes die geringsten Störeinflüsse auf den Temperaturverlauf ergeben und sich eine gleichmäßige Temperaturverteilung im Bereich der Probe einstellt.

Die Gleichförmigkeit des Temperaturfeldes im Probenraum kann noch dadurch gesteigert werden, dass der Probenraum zwischen den oberseitigen und unterseitigen Heizelement eine Höhe hat, die um ein Mehrfaches geringer als der Durchmesser des Probenraumes ist. In zweckmäßiger Ausgestaltung ist dabei der Probenraum hohlzylindrisch und entsprechend seiner ober- und unterseitigen Heizelemente kreisförmig.

In weiterer vorteilhafter Ausbildung nach der Erfindung sind die ober- und die unterseitigen Heizelemente sowie die Seitenwände des Probenraumes die mit einer Wärmeisolation hinterfüttert sind.

Ein vorteilhafter Aufbau des Ofens ergibt sich durch einen in ein Oberteil und ein Unterteil geteilten Ofenkörper, wobei die Trennebene zwischen dem Oberteil und dem Unterteil zwischen den ober- und den unterseitigen Heizelement durch den Probenraum hindurchgeht. Man kann folglich das Oberteil vom Unterteil des Ofenkörpers abnehmen, womit der Probenraum leicht zugänglich und die Beladung des Probenraumes auch durch Robotertechnik sehr einfach möglich ist. Dabei hat zweckmäßig der Ofenkörper eine zylindrische Grundform, deren Achse mit der des Probenraumes zusammenfällt.

Für den Strahlengang der optischen Messeinrichtung ist radial am Unterteil des Ofens jeweils an der gegenüberliegende Seite ein optisches Fenster vorgesehen.

Der Ofen ist für den Betrieb unter Vakuum und Schutzgas ausgelegt. Entsprechende Vorkehrungen wie Dichtungselemente an der Trennebene und an den optischen Fenstern garantieren diese Betriebsart.

Die Erfindung wird nachfolgend anhand zweier Ausführungsbeispiele mit Bezug auf die beigefügten Zeichnungen näher erläutert. Es zeigen:
- Figur 1: eine geschnittene Seitenansicht auf ein Ausführungsbeispiel eines erfindungsgemäßen Ofens;
- Figur 2: eine geschnittens Draufsicht auf den Ofen der Figur 1;
- Figur 3: eine perspektivische Ansicht des Ofens der Figur 1;
- Figur 4: eine perspektivische Ansicht des Ofens der Figur 1 mit geöffnetem Oberteil;
- Figur 5: eine perspektivische Ansicht eines modifizierten Ausführungsbeispiels, und
- Figur 6: eine perspektivische Ansicht des Ofens der Figur 5 mit geöffnetem Oberteil.

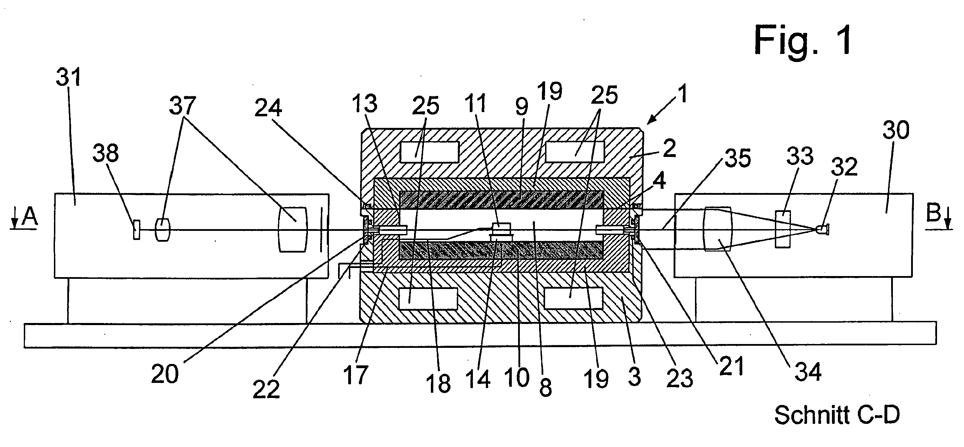

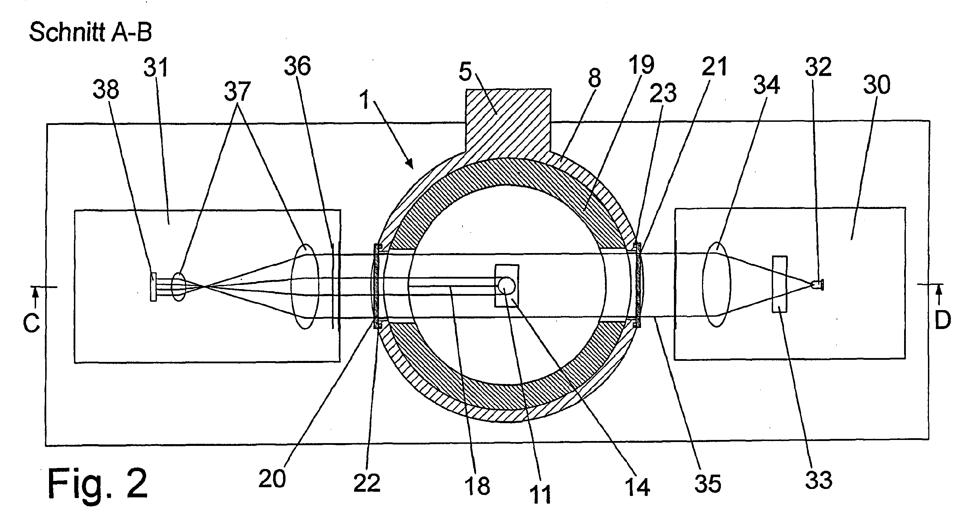

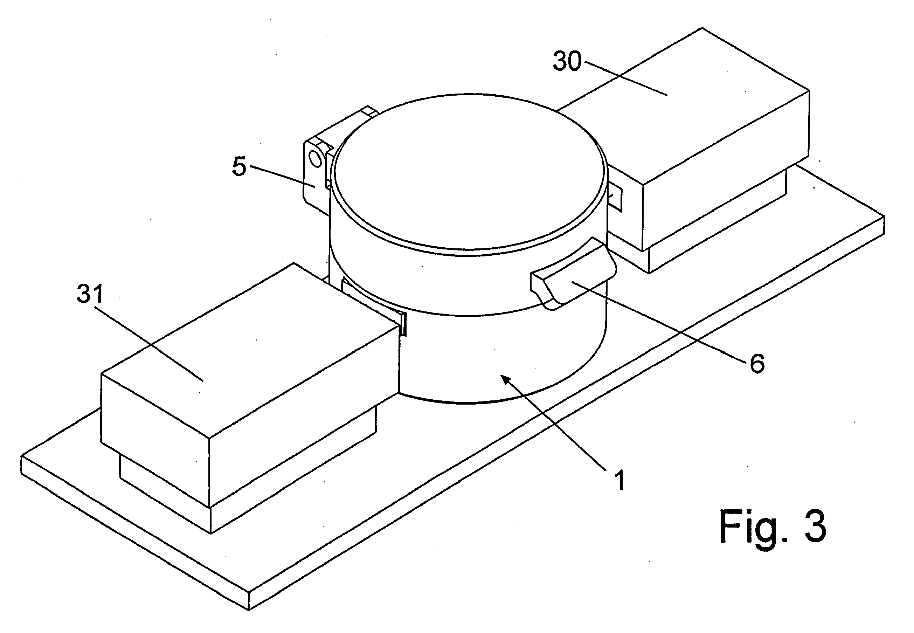

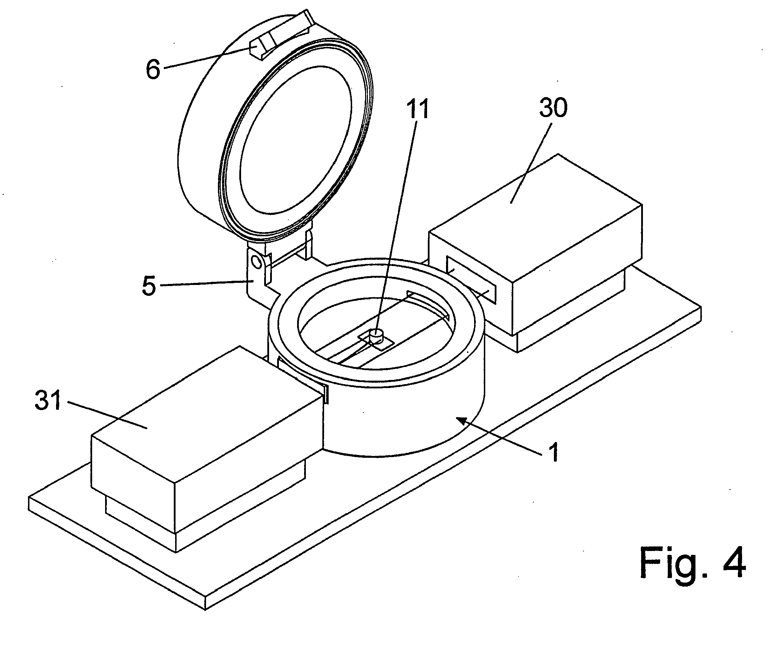

In den Figuren 1 bis 4 ist ein Ofen 1 dargestellt, der eine zylindrische Grundform hat. Er gliedert sich in ein Oberteil 2 und ein Unterteil 3, die voneinander abhebbar sind und entlang einer im horizontal verlaufenden Trennebene 4 deckungsgleich aufeinandersetzbar sind. Das Abheben und Aufsetzen des Oberteils 2 kann über ein Scharnier 5 erfolgen, das an dem Oberteil 2 und dem Unterteil 3 festgelegt ist. Auf der gegenüberliegenden Seite ist ein Griff 6 an dem Oberteil 2 vorgesehen.

Zentral im Inneren des zylindrischen Ofenkörpers 1 umschließen das Oberteil 2 und das Unterteil 3 einen Probenraum 8, der eine flache, hohlzylindrische Gestalt hat und koaxial im Ofenkörper 1 angeordnet ist. Durch diesen Probenraum 8 geht die Trennebene 4 zwischen dem Oberteil 2 und dem Unterteil 3 in horizontaler Richtung hindurch. Mit dem Aufsetzen des Oberteils 2 auf das Unterteil 3 ist der Probenraum 8 verschlossen. Oberseitig wird der Probenraum 8 durch eine Heizelement 9 begrenzt, die im wesentlichen die Gestalt z.B. einer kreisförmigen Scheibe haben kann, welche an der Unterseite des Oberteils 2 zur Trennebene 4 hin angeordnet ist. In analoger Weise wird der Probenraum 8 nach unten hin durch ein unteres Heizelement 10 begrenzt, wobei die kreisförmigen Heizelemente 9 und 10 miteinander deckungsgleich sind.

Der hohlzylindrische Probenraum 8 hat eine Höhe, die um ein Mehrfaches kleiner als der Durchmesser des Probenraums 8 ist. Der Probenraum ist durch eine Seitenwandung 13 in Form einer umlaufenden Zylindermantelinnenfläche umschlossen, über die hinweg die Naht der Trennebene 4 verläuft. Der Durchmesser des Probenraums 8 ist etwa gleich groß wie die oberen und unteren Heizelemente 9 und 10 welche von einer Wärmeisolation 19 randseitig umfasst werden. Die Wärmeisolation im Oberteil 2 und im Unterteil 3 des Ofenkörpers 1 ist derart angeordnet, dass bei geschlossenem Oberteil 2 der Probenraum 8 wärmeisoliert ist und auf hohe Temperaturen von beispielsweise bis 2000°C beheizbar ist.

Zentral im Probenraum 8 ist als Probenträger ein Podest 14 angeordnet, das eine ebene, horizontale Oberseite hat. Auf dem Podest 14 liegt eine Probe 11, die von oben her aufsetzbar ist. Die Probe 11 kann für eine Vermessung an jeder Stelle des Podestes 14 im Bereich eines Strahlenganges 35 abgelegt werden, wobei durch die Anordnung der Heizelemente 9 und 10 sich im Bereich des Podestes 14 ein gleichmäßiges Temperaturprofil ausbildet.

In der Nähe des Podests 14 befindet sich noch ein Probenthermoelement 18 und in oder an der Heizscheibe 10 ein Regelthermoelement 17. Zum Betrieb des Ofens 1 bei hohen Temperaturen ist ferner noch in dem Oberteil 2 und dem Unterteil 3 eine Wasserkühlung 25 vorgesehen.

Benachbart zu dem Ofen 1 ist ein optisches System angeordnet, das die Längenänderung der Probe 11 in Abhängigkeit von der Temperatur misst.

Das optische System umfasst einen optischen Sender 30 und einem Empfänger 31. Der Sender 30 hat eine Lichtquelle in Form einer Hochleistungs-GaN-LED 32, welche ein Licht mit sehr konstanter Wellenlänge aussendet und eine Diffusionseinheit 33 sowie eine Kollimatorlinse 34 die das Licht parallel aussendet. Der dadurch erzeugte parallele Strahlengang 35 tritt durch ein in dem Unterteil 3 ausgebildetes Fenster 21 ein und trifft dort auf die Probe 11. Nur Strahlen die nicht auf die Probe 11 treffen, treten durch ein Fenster 20 wieder aus, das auf der zu dem Fenster 21 gegenüberliegenden Seite des Unterteils 3 angeordnet ist.

Das Fenster 21 ist über eine Dichtung 23 und das Fenster 20 ist über eine Dichtung 22 an einer Seitenwand des Probenraumes 8 festgelegt. Ferner ist das Oberteil 2 mit einer Dichtung 24 abgedichtet an dem Unterteil 3 angeordnet, so dass der Probenraum 8 mit einer Gasfüllung oder mit einem Vakuum versehen sein kann.

Dadurch entstehen Schattenstrahlen, die auf der Empfängerseite 31 zunächst auf ein Filter 36 auftreffen. Der Filter 36 kann so ausgebildet sein, dass er nur die Strahlen mit der von der Hochleistungs-GaN-LED 32 ausgesandten Wellenlänge durchlässt. Anschließend durchlaufen die Strahlen ein telezentrisches optisches System 37 mit ein oder mehreren Linsen und treffen dann auf einen Hochgeschwindigkeits-Linear-CCD Sensor 38. Die Signale des Sensors 38 werden zur Auswertung an einem A/D-Wandler und dann zu einem digitalen Randerkennungs-Prozessor und zur CPU-Einheit weitergeleitet.

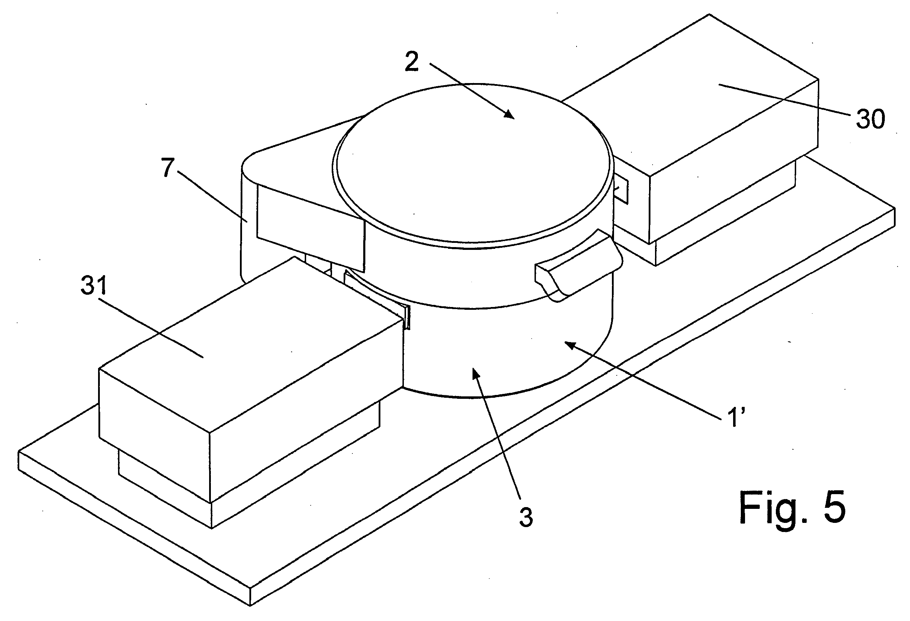

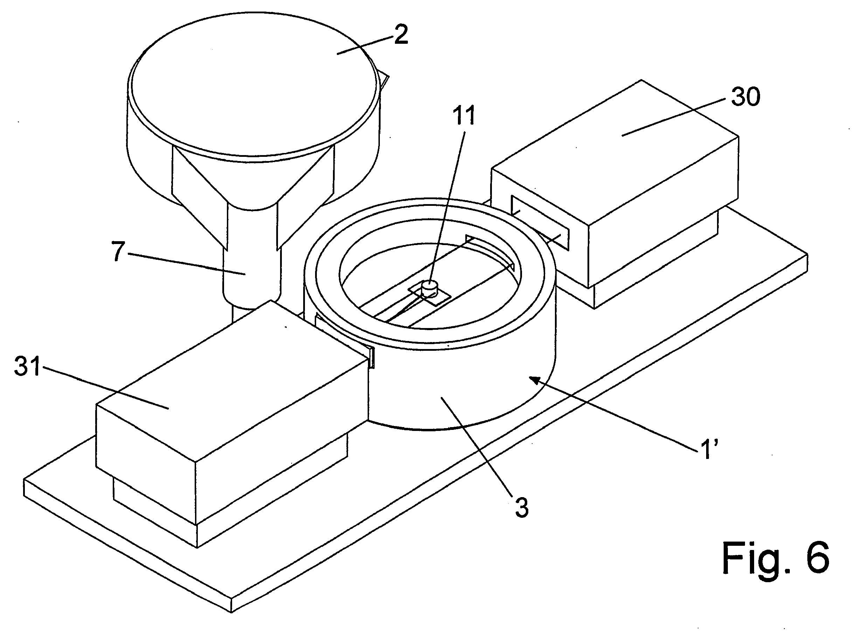

In den Figuren 5 und 6 ist eine modifizierte Ausführungsform eines Ofens 1' dargestellt, bei dem statt des Scharnieres 5 ein Hub- und Schwenkmechanismus 7 vorgesehen ist. Durch den Hub- und Schwenkmechanismus 7 wird das Oberteil 2 von dem Unterteil 3 abgehoben und seitlich weggeschwenkt, so dass der Probenraum 8 von oben zugänglich ist, um die Probe 11 einzusetzen oder zu entnehmen. Im übrigen ist der Ofen 1' wie bei dem vorangegangenen Ausführungsbeispiel ausgebildet.

## Patentansprüche

1. Ofen zur Durchführung von dilatometrischen Untersuchungen mit einem schließbaren Probenraum (8), an dem Fenster (20, 21) zur Durchführung von Strahlen (35) vorgesehen sind, wobei in dem Probenraum (8) ein Probenträger (14) mit einer horizontalen Auflagefläche zur Aufnahme von Proben (11) angeordnet ist, wobei der Probenraum über ein oder mehrere Heizelemente (9, 10) beheizbar ist, **dadurch gekennzeichnet, dass** die Heizelemente (9, 10) auf der zum Probenträger (14) gewandten Seite im wesentlichen eben ausgebildet sind und den Probenraum (8) an der Oberseite und der Unterseite begrenzen, wobei sich die Heizelemente (9, 10) in eine horizontale Richtung allseitig über den Probenträger (14) hinaus erstrecken.

2. Ofen nach Anspruch 1, **dadurch gekennzeichnet, dass** die Länge oder der Durchmesser der Heizelemente (9, 10) um ein Mehrfaches länger sind als die Auflagefläche des Probenträgers (14).

3. Ofen nach Anspruch 1 oder 2, **dadurch gekennzeichnet, dass** an einem Oberteil (2) ein oberes scheibenförmiges Heizelement (9) und an einem Unterteil (3) ein unteres scheibenförmiges Heizelement (10) vorgesehen sind, wobei das Oberteil (2) von dem Unterteil (2) abnehmbar ausgebildet ist.

4. Ofen nach Anspruch 3, **dadurch gekennzeichnet, dass** eine horizontale Trennebene (4) zwischen dem Oberteil (2) und dem Unterteil (3) zwischen den ober- und den unterseitigen Heizelemente (9, 10) durch den Probenraum (8) hindurchgeht.

5. Ofen nach einem der Ansprüche 1 bis 4 **dadurch gekennzeichnet, dass** der Probenraum (8) zwischen den oberseitigen und unterseitigen Heizelementen (9, 10) eine Höhe hat, die um ein Mehrfaches geringer als der Durchmesser des Probenraumes (8) ist.

6. Ofen nach einem der Ansprüche 1 bis 5, **dadurch gekennzeichnet, dass** der Probenraum (8) hohlzylindrisch ist und die ober- und unterseitigen Heizelemente (9, 10) kreisförmig ausgebildet sind.

7. Ofen nach einem der Ansprüche 1 bis 6, **dadurch gekennzeichnet, dass** die Heizelemente (9, 10) sowie Seitenwände (13) des Probenraumes (8) auf der zum Probenraum (8) abgewandten Seite mit einer Wärmeisolation (19) hinterfüttert sind.

8. Ofen nach einem der Ansprüche 1 bis 7, **dadurch gekennzeichnet, dass** der Probenraumes (8) eine zylindrischen Form besitzt und der Probenträger (14) radial zentriert in dem Probenraum angeordnet ist.

9. Ofen nach einem der Ansprüche 1 bis 8, **dadurch gekennzeichnet, dass** benachbart zu einem ersten Fenster (21) an dem Unterteil (3) eine Lichtquelle (32) angeordnet ist, und auf der gegenüberliegenden Seite des Unterteiles (3) ein zweites Fenster (20) vorgesehen ist, an dem benachbart ein Sensor zur Erfassung der Länge einer Probe (11) angeordnet ist.

## Claims

1. Furnace for performing dilatometric assays comprising a closable sample chamber (8), on which windows (20,21) are provided for the passage of beams (35), a sample carrier (14), having a horizontal contact surface for receiving samples (11), being situated in the sample chamber (8), it being possible for the sample chamber to be heated by one or more heating elements (9, 10), **characterized in that** the heating elements (9, 10) are substantially flat on the side facing toward the sample carrier (14) and delimit the sample chamber (8) on the top side and the bottom side, the heating elements (9, 10) extending on all sides in a horizontal direction beyond the sample carrier (14).

2. Furnace according to Claim 1, **characterized in that** the length or the diameter of the heating elements (9, 10) is multiple times longer than the contact surface of the sample carrier (14).

3. Furnace according to Claim 1 or 2, **characterized in that** a top disk-shaped heating element (9) is provided on a top part (2) and a bottom disk-shaped heating element (10) is provided on a bottom part (3), the top part (2) being configured to be removable from the bottom part (3).

4. Furnace according to Claim 3, **characterized in that** a horizontal partition plane (4) between the top part (2) and the bottom part (3) passes through the sample chamber (8) between the top and bottom heating elements (9, 10).

5. Furnace according to one of Claims 1 to 4, **characterized in that** the sample chamber (8) has a height between the top and bottom heating elements (9, 10) which is multiple times smaller than the diameter of the sample chamber (8).

6. Furnace according to one of Claims 1 to 5, **characterized in that** the sample chamber (8) is hollow-cylindrical and the top and bottom heating elements (9, 10) are circular.

7. Furnace according to one of Claims 1 to 6, **characterized in that** the heating elements (9, 10) and side walls (13) of the sample chamber (8) are backed with thermal insulation (19) on the side facing away from the sample chamber (8).

8. Furnace according to one of Claims 1 to 7, **characterized in that** the sample chamber (8) has a cylindrical shape and the sample carrier (14) is situated radially centered in the sample chamber.

9. Furnace according to one of Claims 1 to 8, **characterized in that** a light source (32) is situated adjacent to a first window (21) on the bottom part (3) and a second window (20) is provided on the opposite side of the bottom part (3), which is adjacent to a sensor for detecting the length of a sample (11).

## Revendications

1. Four destiné à l'exécution de recherches dilatométriques avec un espace pour les échantillons (8) pouvant être fermé, sur lequel des fenêtres (20, 21) destinées aux passages de rayons (35) sont prévues, sachant qu'un porte-échantillons (14) avec une surface d'appui horizontale pour la réception d'échantillons (11) est disposé dans l'espace pour les échantillons (8), sachant que l'espace pour les échantillons peut être chauffé par un ou plusieurs éléments de chauffe (9, 10), **caractérisé en ce que** les éléments de chauffe (9, 10) sont réalisés sensiblement plans sur le côté tourné vers le porte-échantillons (14) et délimitent l'espace pour les échantillons (8) sur le côté supérieur et le côté inférieur, sachant que les éléments de chauffe (9, 10) s'étendent dans une direction horizontale de tout côté au-delà du porte-échantillons (14).

2. Four selon la revendication 1, **caractérisé en ce que** la longueur ou le diamètre des éléments de chauffe (9, 10) est plus long d'un multiple que la surface d'appui du porte-échantillons (14).

3. Four selon la revendication 1 ou 2, **caractérisé en ce qu'**un élément de chauffe (9) supérieur en forme de disque est prévu sur une partie supérieure (2) et un élément de chauffe (10) inférieur en forme de disque est prévu sur une partie inférieure (3), sachant que la partie supérieure (2) est réalisée détachable de la partie inférieure (3).

4. Four selon la revendication 3, **caractérisé en ce qu'**un plan de séparation (4) horizontal traverse l'espace pour les échantillons (8) entre la partie supérieure (2) et la partie inférieure (3) entre les éléments de chauffe (9, 10) côté supérieur et côté inférieur.

5. Four selon l'une quelconque des revendications 1 à 4, **caractérisé en ce que** l'espace pour les échantillons (8) présente une hauteur entre les éléments de chauffe (9, 10) côté supérieur et côté inférieur, qui est plus faible d'un multiple que le diamètre de l'espace pour les échantillons (8).

6. Four selon l'une quelconque des revendications 1 à 5, **caractérisé en ce que** l'espace pour les échantillons (8) est cylindrique et creux et les éléments de chauffe (9, 10) côté supérieur et inférieur sont réalisés de manière circulaire.

7. Four selon l'une quelconque des revendications 1 à 6, **caractérisé en ce que** les éléments de chauffe (9, 10) ainsi que des parois latérales (13) de l'espace pour les échantillons (8) sont remplis d'une isolation thermique (19) sur le côté éloigné de l'espace pour les échantillons (8).

8. Four selon l'une quelconque des revendications 1 à 7, **caractérisé en ce que** l'espace pour les échantillons (8) possède une forme cylindrique et le porte-échantillons (14) est disposé radialement au centre de l'espace pour les échantillons.

9. Four selon l'une quelconque des revendications 1 à 8, **caractérisé en ce qu'**une source de lumière (32) est disposée de manière contiguë à une première fenêtre (21) sur la partie inférieure (3), et une seconde fenêtre (20) est prévue sur le côté opposé de la partie inférieure (3), sur laquelle est disposé de manière contiguë un capteur pour la détection de la longueur d'un échantillon (11).
